# DEMANDE DE BREVET EUROPEEN

(11) **EP 1 577 650 A1**
(43) Date de publication de la demande: **21.09.2005**
(21) Numéro de dépôt: 05300125.1
(22) Date de dépôt: 17.02.2005
(51) Int. Cl.: G01F 15/14

(54) **Procédé de fixation sélective de modules à des compteurs**

(30) Priorité: 24.02.2004 FR 0450339
(71) Demandeur: Actaris S.A.S., 92100 Boulogne (FR)
(72) Inventeur: CROS, Alain, 71680, CRECHES SUR SAONE (FR); DEMIA, Laurent, 01120, MONTLUEL (FR)
(74) Mandataire: Lenne, Laurence

(57) **Abrégé**

La présente invention a pour objet un procédé de fixation sélective d'un ensemble de modules à des compteurs, notamment des compteurs d'eau. L'invention a également pour objet un module, un compteur et un dispositif formé d'un compteur et d'un module.

La fixation des modules (10, 16 ou 26) dudit ensemble est rendue possible uniquement à au moins une série déterminée de compteurs (12, 18 ou 28), de sorte que seuls lesdits modules dudit ensemble puissent être fixés auxdits compteurs, ce qui permet de différencier lesdits compteurs de ladite série par rapport à des compteurs d'autres séries.

Application de l'invention à la lecture à distance de compteurs.

## Description

La présente invention a pour objet un procédé de fixation sélective et amovible de modules à des compteurs, notamment des modules de relevé à distance de compteurs tels que des compteurs d'eau, et un module adapté à être fixé de façon sélective et amovible à un compteur faisant partie d'une série déterminée de compteurs, à l'exclusion des compteurs d'autres séries de compteurs. L'invention a également pour objet un compteur sur lequel peut se fixer de façon sélective un module, ainsi qu'un dispositif constitué dudit compteur et dudit mobile.

La lecture des compteurs de gaz, d'eau et d'électricité est effectuée de façon classique par des releveurs qui se déplacent au moins une fois par an aux domiciles des personnes où se trouvent les compteurs. La lecture de ces compteurs permet de facturer aux consommateurs les quantités d'électricité et de fluide réellement consommées pendant un intervalle de temps déterminé. Cependant cette lecture à domicile rencontre des difficultés. Ainsi les personnes concernées ne sont pas toujours présentes à leurs domiciles et le releveur ne peut pas accéder aux compteurs. De plus, les personnes ont fréquemment un emploi, en dehors de leurs domiciles, ce qui réduit les plages horaires pendant lesquels les releveurs peuvent intervenir. Egalement, des accidents se produisent régulièrement, provoqués par des agressions ou des morsures d'animaux, notamment de chiens, dont sont victimes les releveurs de compteurs.

Pour toutes ces raisons, la tendance est actuellement d'effectuer les lectures de compteurs à distance. Pour cela, on utilise différents procédés, par exemple par radio, par ligne téléphonique ou par câble. Il est cependant nécessaire d'équiper les compteurs de moyens permettant une telle lecture à distance (souvent appelé "télérelevé"). Certains compteurs sont actuellement munis de tels moyens pendant leur fabrication et sont donc installés prêts à être lus par télérelevé. Pour les compteurs d'électricité, ceci ne pose guère de difficultés puisque ces compteurs possèdent déjà une source d'énergie, l'électricité. Par contre, pour les compteurs de gaz ou d'eau, il est nécessaire de les munir d'un module de communication ayant une source d'énergie autonome, une pile par exemple. Ce module est donc cher et il n'est généralement pas économiquement justifié d'équiper les compteurs de tels modules en cours de fabrication. La solution consiste alors à prééquiper les compteurs de moyens permettant la fixation, immédiatement en usine ou la plupart du temps ultérieurement, des modules de télérelevé sur les compteurs, selon les besoins. De plus, les modules sont généralement fixés de façon amovible sur les compteurs, ce qui permet, sans avoir à changer les compteurs, de changer les modules pour des raisons imposées par des contraintes administratives ou technologiques. En Allemagne par exemple, il est nécessaire de remplacer tous les cinq ans la partie de mesure des compteurs d'eau par des éléments neufs.

Pour les compteurs d'eau, le totalisateur est muni d'un petit disque qui tourne à une vitesse de rotation proportionnelle à la consommation instantanée. Le module de télérelevé est équipé d'un capteur de mesure optique, magnétique, capacitif ou inductif qui détecte et enregistre cette vitesse de rotation.

Deux solutions sont actuellement utilisées pour ajouter un module à un compteur : le module se fixe soit au-dessus du totalisateur, ce qui n'est pas toujours possible pour des raisons d'encombrement et/ou d'esthétique, soit dans un logement du totalisateur spécialement conçu pour recevoir le module.

Les compteurs et les modules de télérelevé fabriqués par un même fabricant sont généralement compatibles entre eux, les modules étant conçus pour être fixés sur la plupart de ces compteurs. Cependant pour des raisons techniques, marketing ou autres, il peut être utile ou même nécessaire de différencier les modules entres eux de sorte que certains modules peuvent se fixer sur certains compteurs déterminés mais pas sur d'autres. Par exemple, la détection de la vitesse de rotation du petit disque tournant du totalisateur peut nécessiter des fréquences d'échantillonnage différentes selon le type de compteur. Ainsi, si la vitesse de rotation du petit disque est plus élevée pour un type de compteur, comparée à un autre type de compteur, la vitesse d'échantillonnage effectuée par le module devra être plus élevée. Un module standard sur un tel type de compteur ne détecterait pas les hauts débits d'eau et transmettrait des données de consommation erronées. Il est alors nécessaire d'individualiser les différents types de modules.

Le gestionnaire d'un parc de compteurs, assurant le télérelevé de ses compteurs par des modules qu'il a achetés, peut souhaiter conserver le contrôle de la gestion de ce parc. Ce but peut être atteint en s'assurant que seuls les modules qui sont sa propriété sont compatibles avec ses compteurs et que d'autres modules ne conviendront pas.

On peut également concevoir qu'un industriel finance le développement d'un type de module de télérelevé particulier, par exemple selon ses propres spécifications ou selon sa propre technologie, et qu'il impose au fabricant de modules et de compteurs, contractuellement par exemple, que ce type de modules ne soit fabriqué, au moins pendant une certaine période, que pour lui-même. Un moyen de s'assurer qu'une telle obligation est bien respectée consiste à rendre compatible ce type de modules uniquement avec les compteurs de cet industriel.

D'autres raisons peuvent exister pour lesquelles une personne souhaite différencier ses compteurs et/ou ses modules de ceux de ses concurrents.

La présente invention vise à résoudre les problèmes qui viennent d'être exposés.

De façon plus précise la présente invention a pour objet un procédé de fixation sélective d'un ensemble de modules amovibles à des compteurs, notamment des compteurs d'eau, selon lequel on rend possible la fixation des modules dudit ensemble uniquement à au moins une série déterminée de compteurs, de sorte que seuls lesdits modules dudit ensemble puissent être fixés auxdits compteurs, ce qui permet de différencier lesdits compteurs de ladite série par rapport à des compteurs d'autres séries. La fixation pour chacun des modules avec chacun des compteurs est rendue possible par des moyens de fixation solidaires du module coopérant avec des moyens de fixation solidaires du compteur, les moyens de fixation du module et du compteur étant complémentaires ce qui permet d'associer et de fixer le module au compteur. Les moyens de fixation du module et du compteur comprennent des formes complémentaires qui coopèrent entre elles pour permettre ladite fixation.

Selon un mode de réalisation, les formes complémentaires coopèrent entre elles par des formes interpénétrantes.

Selon une réalisation avantageuse de l'invention, on augmente le nombre de séries de compteurs compatibles avec les modules dudit ensemble en modifiant lesdites formes complémentaires, par exemple en enlevant une partie déterminée desdites formes.

Selon un mode de réalisation de l'invention, lesdites formes inter-pénétrantes sont rendues compatibles en ajustant leurs profondeurs d'interpénétration.

L'invention a également pour objet un module adapté à être fixé de façon sélective et amovible à un compteur faisant partie d'une série déterminée de compteurs, notamment des compteurs d'eau, ledit module comportant des moyens de fixation de formes complémentaires à des moyens de fixation situés sur lesdits compteurs de ladite série, à l'exclusion de compteurs d'une autre série, lesdits moyens de fixation dudit module et lesdits moyens de fixation desdits compteurs de ladite série formant au moins une clé mécanique, permettant ainsi de fixer ledit module uniquement auxdits compteurs de ladite série.

L'invention a également pour objet un compteur apte à être fixé de façon sélective à un module amovible, le compteur faisant partie d'une série déterminée de compteurs identiques, notamment des compteurs d'eau, ledit compteur comportant des moyens de fixation identiques pour chacun desdits compteurs de ladite série, lesdits moyens étant de formes complémentaires à des moyens de fixation situés sur ledit module, lesdits moyens de fixation dudit compteur et lesdits moyens de fixation dudit module formant au moins une clé mécanique permettant ainsi de fixer ledit module uniquement auxdits compteurs de ladite série, à l'exclusion de compteurs d'une autre série.

Selon une réalisation avantageuse, les moyens de fixation du module ou du compteur comportent des moyens cassables qui permettent, lorsqu'ils sont enlevés, de fixer le module sur au moins une autre série de compteurs, tout en restant compatibles avec les compteurs de ladite série.

Les moyens de fixation du module et les moyens de fixation des compteurs coopèrent avantageusement entre eux par des formes en relief et en creux.

L'invention a aussi pour objet un dispositif constitué dudit module fixé audit compteur.

D'autres avantages et caractéristiques de l'invention apparaîtront au cours de la description qui va suivre d'un mode de réalisation, donné à titre d'exemple non limitatif, en référence aux dessins annexés et sur lesquels :
- les figures 1 A, 1B et 1C illustrent l'une des nombreuses façons de procéder pour répartir la compatibilité des modules avec les compteurs,
- les figures 2A, 2B et 2C illustrent également une autre façon de procéder, et
- les figures 3A et 3B montre une forme de réalisation de l'invention.

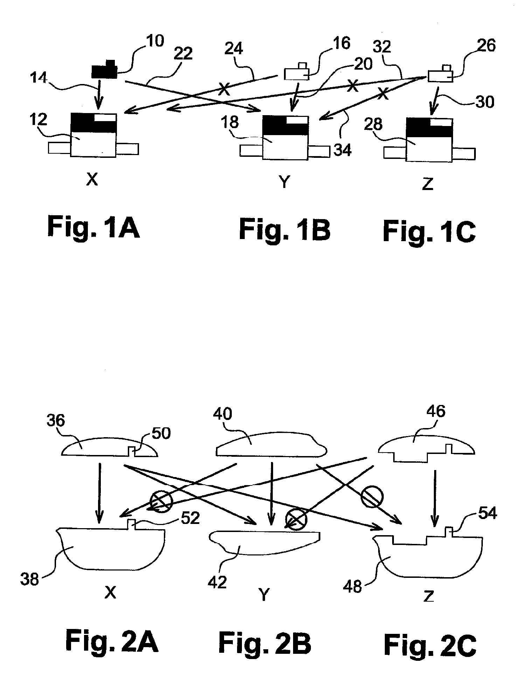

Sur les figures 1, une flèche non barrée indique que le montage du module à l'origine de la flèche est possible sur le ou les compteurs désignés par la flèche. A l'inverse, le montage n'est pas possible lorsque la flèche est barrée. Sur la figure 1 A, le type de module de télérelevé 10 est destiné à être fixé sur des compteurs 12 d'un client X, comme indiqué par la flèche 14. De façon plus précise, les modules se fixent sur les totalisateurs des compteurs. Sur la figure 1 B, le type de module 16 est destiné à équiper les compteurs 18 d'un client Y comme indiqué par la flèche 20. Cependant, le type de module 10 peut aussi équiper les compteurs 18 du client Y comme indiqué par la flèche 22. L'ensemble des modules 10 peut donc être monté sur les compteurs de deux clients différents X et Y, mais l'ensemble des modules 16 ne peut être monté que sur les compteurs d'un seul client, le client Y, comme illustré par la flèche barrée 24.

Sur la figure 1C, on remarque que seul le type de module 26 peut être fixé sur les compteurs 28, comme indiqué par la flèche 30 et par les flèches barrées 32 et 34.

Selon le procédé de l'invention, on sélectionne les modules qui sont aptes à être fixés sur un ou plusieurs types de compteurs. Dans l'exemple des figures 1, le type de compteur correspond à un client ou à un parc de compteurs déterminé.

Dans l'exemple donné, les compteurs 12, 18 et 28 sont du même modèle d'un même fabricant et ne différent donc, selon l'invention, que par les moyens de fixation des modules sur les compteurs. De façon générale, pour la mise en oeuvre de l'invention, les compteurs peuvent être différents mais on suppose au préalable que les modules 10, 16 et 26 peuvent être fixés indifféremment sur les compteurs des clients X, Y et Z. En appliquant le procédé de l'invention, on différencie alors les moyens de fixation des modules sur les compteurs de sorte que les modules 10, 16 et 26 ne puissent se fixer sur les compteurs, selon l'exemple donné en regard des figures 1, que de la façon sélective indiquée précédemment. Par le biais des moyens de fixation, on sélectionne ainsi les modules et les compteurs qui sont susceptibles d'être connectés entre eux, ces modules ne s'adaptant pas à d'autres compteurs, même si tous les compteurs proviennent d'un même fabricant et sont en principe identiques.

Les figures 2A, 2B et 2C représentent une autre combinaison possible. On a à nouveau trois clients ou trois parcs de compteurs ou de totalisateurs désignés par X, Y et Z. Une flèche non barrée allant d'un module vers un compteur indique que le module est compatible avec le compteur. Inversement, une flèche traversant un rond barré indique que la compatibilité n'existe pas. Ainsi, le module 36 est compatible avec les compteurs ou les totalisateurs 38, 42 et 48 alors que le module 40 ou 46 n'est compatible qu'avec le compteur respectivement 42 ou 48. Sur les figures 2, on remarque que les formes des faces en regard des modules et des compteurs illustrent la compatibilité. Ainsi l'évidemment 50 du module 36 est compatible avec les protubérances 52 et 54 des surfaces des compteurs respectivement 38 et 48. De même, l'absence de protubérance sur la surface du compteur 42 rend la compatibilité possible avec le module 36, mais pas avec le module 46. La forme particulière de la surface du module 46 n'est compatible qu'avec la surface de forme complémentaire du compteur 48, les surfaces en regard s'emboîtant l'une dans l'autre.

Lorsque le nombre de combinaison est important, il est utile d'établir une table de vérité afin d'avoir une vision claire des compatibilités ou des incompatibilités.

| | Module 36 | Module 40 | Module 46 |
|---|---|---|---|
| Compteur X | 1 | 0 | 0 |
| Compteur Y | 1 | 1 | 0 |
| Compteur Z | 1 | 0 | 1 |

La table ci-dessus montre la situation correspondant aux figures 2. La compatibilité ou l'incompatibilité correspond au chiffre respectivement 1 ou 0. D'un seul coup d'oeil on peut savoir si la compatibilité existe ou non.

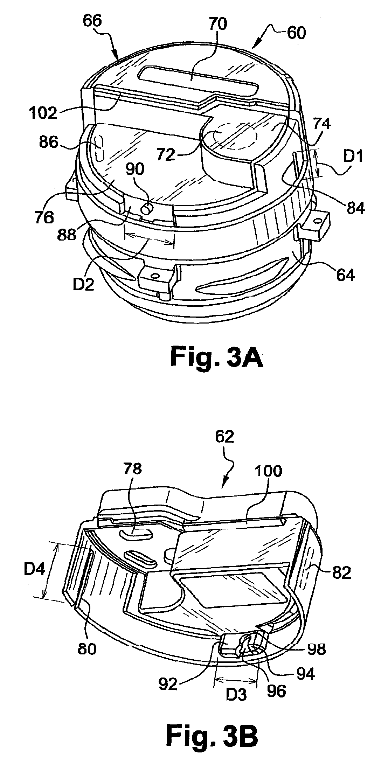

Le mode de réalisation représenté sur les figures 3A et 3B et décrit ci-après concerne plus spécialement les compteurs d'eau, bien que l'invention s'applique également à d'autres types de compteurs tels que les compteurs de gaz. La figure 3A montre un compteur d'eau 60 et la figure 3B un module de télérelevé 62 destiné à être fixé au compteur 60.

Le compteur 60 comporte une base 64 généralement en laiton qui inclut la partie mesurante (non représentée) du compteur. Cette partie comporte principalement une turbine ou un piston oscillant qui est mis en mouvement de rotation sous l'effet de l'écoulement de l'eau dans le compteur. Un totalisateur 66 est monté sur la base 64. Le totalisateur comporte un mécanisme d'engrenage (non représenté) relié par couplage magnétique à l'élément mesurant. Le totalisateur comprend des pignons reliés à des rouleaux qui enregistrent la consommation d'eau. Ces rouleaux peuvent être lus à travers une fenêtre 70. Le mécanisme d'engrenage est aussi relié à un petit disque 72, visible à travers une fenêtre transparente 74 du totalisateur. Le disque 72 tourne à une vitesse proportionnelle au débit de l'eau s'écoulant dans le compteur. Il est muni d'une ou plusieurs marques qui permettent de détecter sa rotation et d'en mesurer sa vitesse. Le totalisateur comporte un logement 76 destiné à recevoir un module, et notamment le module de télérelevé 62 de la figure 3B.

Le module 62 comporte un détecteur optique (non représenté) détectant et enregistrant la rotation du disque 72 à travers le trou 78. Le module 62 se positionne donc sur le totalisateur de sorte que le trou 78 soit en regard du disque 72. Dans une autre forme de réalisation, le détecteur est un capteur magnétique, inductif ou capacitif et dans ce cas le trou 78 n'est pas nécessaire et la fenêtre 74 peut être remplacée par une paroi optiquement opaque. Le module 62 comporte également des moyens électroniques pour le traitement des signaux émis par le détecteur optique et pour la communication du module avec un poste central situé dans les locaux de la société assurant le télérelevé des compteurs. Cette communication peut être par exemple par radio ou par des techniques filaires.

La fixation du module 62 sur le totalisateur 66, et plus généralement sur le compteur 60, s'effectue de façon sélective, c'est-à-dire que les moyens de fixation ont été conçus pour que seuls les modules munis de ces moyens permettent de fixer le module 62 au compteur 60. Ces moyens sont également conçus pour que le module puisse être amovible, donc enlevé du totalisateur relativement aisément.

Ces moyens de fixation sont formés, d'une part, de deux rainures ou fentes rectilignes 80 et 82 disposées diamétralement opposées sur la surface intérieure du pourtour du module et coopérant avec des renflements en forme de bourrelets rectilignes respectivement 84 et 86 situés diamétralement opposés sur la surface extérieure du totalisateur et, d'autre part, d'une encoche 88 avec un ergot 90 coopérant avec une saillie en relief 92 munie d'un évidemment en forme de trou de serrure 94. Ce dernier comporte deux parties : un canal 96 de forme évasée (pour un trou de serrure, partie par laquelle passe le panneton d'une clé) et un logement cylindrique 98 (pour un trou de serrure, partie par laquelle passe la tige d'une clé).

En approchant latéralement le module 62 vers le totalisateur 66, de la gauche vers la droite sur la figure 3A, pour positionner le module 62 dans le logement 76, les deux rainures 80 et 82 viennent se "clipser", se positionner en s'agrippant, dans les renflements respectivement 84 et 86. De plus, la saillie 92 vient se loger dans l'encoche 88 et l'ergot 90 dans le logement cylindrique 98.

Pour positionner le module dans son logement 76, il est nécessaire, d'une part, que la longueur D4 des rainures 80 et 82 soit supérieure à la longueur D1 respectivement des renflements 84 et 86. De façon générale, il est nécessaire que la rainure 80 et le renflement 84 soient de formes complémentaires ou interpénétrantes; il en est de même de la rainure 82 et du renflement 86. Ces rainures forment ainsi une paire de clés mécaniques vis-à-vis des renflements 84 et 86. Si la longueur D4 de l'une des rainures 80 ou 82 est inférieure à la longueur D1 des renflements 84 et 86, le module 62 ne peut pas se clipser et se fixer sur le compteur 60. Pour créer ou non une compatibilité, on peut également jouer sur la profondeur de pénétration du renflement dans la rainure ou sur la forme de la section de la rainure ou du renflement.

Pour pouvoir loger le module 62 dans son logement 76, il est aussi nécessaire que la largeur D2 de l'encoche 88 soit supérieure à la largeur D3 de la saillie 92. La saillie 92 forme ainsi une clé mécanique pour l'encoche 88. Si la largeur D2 est inférieure à la largeur D3 de la saillie 92, le module 62 ne peut pas être fixé au compteur 60.

De plus, pour pouvoir loger le module 62 dans son logement 76, d'une part le logement cylindrique 98 doit se positionner en regard de l'ergot 90 et, d'autre part, le diamètre de l'ergot 90 doit être inférieur au diamètre du logement cylindrique 98 pour que l'ergot puisse pénétrer dans le logement cylindrique 98. On forme ainsi une autre clé mécanique. Les caractéristiques d'une telle clé qui permettent de la différencier par rapport à d'autres clés du même type sont nombreuses puisque l'on peut avoir, pour l'ergot et/ou le logement cylindrique, par exemple des sections différentes (rondes, carrées, rectangulaires, octogonales) ou des longueurs différentes.

Le mode de réalisation des figures 3A et 3B comporte quatre clés mécaniques : deux clés par les rainures 80 et 82 et les renflements 84 et 86, une clé par l'encoche 88 et la saillie 92 et une clé par l'ergot 90 et le logement cylindrique 98. Avec quatre clés, le nombre de combinaisons possibles pour différencier le montage de modules sur des compteurs est égal à 2 à la puissance 4, c'est-à-dire seize combinaisons possibles. On peut donc individualiser ou personnaliser les modules de seize parcs de compteurs, les modules d'un parc déterminé ne pouvant se fixer que sur les compteurs de ce parc et ne pouvant pas se fixer sur les compteurs des autres parcs. Si on le souhaite on peut renforcer la protection (s'assurer qu'un type de module ne sera pas compatible avec d'autres types de modules) en utilisant plus d'une clé par module. Le nombre de combinaisons possibles dminuent : dans l'exemple précédent, si on utilise deux clés le nombre de combinaisons n'est plus égale à seize mais huit.

Pour des raisons variées, par exemple si le gestionnaire d'un parc de compteurs devient également le gestionnaire d'un autre parc de compteurs déjà installés, les modules compatibles avec les compteurs de l'un des deux parcs n'étant pas compatibles avec les compteurs de l'autre parc, il peut être utile de rendre compatibles les modules des deux parcs. A cet effet, la forme de l'une ou de plusieurs des clés peut être modifiée pour assurer cette compatibilité de façon simple et économique, en simplifiant la forme de la clé. Ceci peut se faire par exemple en concevant un élément de la clé, tel que le renflement 84 et/ou 86 ou l'ergot 90, de sorte qu'il puisse être aisément arraché sans créer de dommage pour le module ou le compteur et que la fixation du module au totalisateur reste possible. Ainsi le renflement 84 ou 86 ne peut être arraché qu'en partie de sorte que le module puisse se clipser sur le totalisateur. Dans ce cas, la compatibilité est rendue possible par une diminution de la longueur du renflement.

Pour être fixé au compteur, le module 62 peut être déplacé de deux façons différentes. Il peut tout d'abord être amené latéralement, par le côté, de gauche à droite sur la figure 3A, pour se positionner dans le logement 76. Les renflements 84 et 86 viennent se clipser dans les rainures respectivement 80 et 82, l'ergot 90 venant simplement se positionner dans le logement cylindrique 98. Ce mode de fixation est appelé ici "fixation latérale". Cependant, il n'est pas toujours possible de déplacer latéralement le module. Par exemple, le compteur peut être monté sur une canalisation d'eau contre une paroi ou dans une paroi ou à l'angle de deux murs.

Selon le mode de réalisation représenté sur les figures 3A et 3B, le module peut être amené verticalement, de haut en bas, pour se fixer dans son logement 76. Ce mode de fixation est appelé ici "fixation verticale". L'extrémité du canal 96 adjacente au logement cylindrique 98 a une largeur très légèrement inférieure au diamètre de l'ergot 90. De ce fait, après avoir été guidé verticalement par le canal 96 de l'évidemment en forme de trou de serrure, l'ergot vient se clipser dans le logement cylindrique 98. Au cours de ce positionnement, les rainures 80 et 82 glissent le long des renflements 84 et 86 et la saillie 92 se positionne dans l'encoche 88. L'ergot assure donc le maintien vertical du module alors que les rainures 80-82 et les renflements 84-86 assurent le maintien horizontal.

Le module comporte également une zone profilée 100 destinée à être clipsée sur le bord 102 du totalisateur. Un chanfrein permet un clipsage vertical plus aisé.

Dans le mode de réalisation décrit, le module est fixé dans un logement du totalisateur spécialement conçu pour recevoir le module. L'invention s'applique également lorsque le module se fixe au dessus du totalisateur.

D'autres formes de clés peuvent être utilisées sans sortir du cadre de la présente invention. Le nombre de clés peut être variable.

Le module peut être un module autre qu'un module de télérelevé, par exemple un module de détection de fraude.

## Revendications

1. Procédé de fixation sélective d'un ensemble de modules amovibles à des compteurs, notamment des compteurs d'eau, **caractérisé en ce que** l'on rend possible la fixation des modules (10, 16 ou 26) dudit ensemble uniquement à au moins une série déterminée de compteurs (12, 18 ou 28), de sorte que seuls lesdits modules dudit ensemble puissent être fixés auxdits compteurs, ce qui permet de différencier lesdits compteurs de ladite série par rapport à des compteurs d'autres séries, ladite fixation étant rendue possible par des moyens de fixation solidaires de chacun desdits modules coopérant avec des moyens de fixation solidaires de chacun desdits compteurs, lesdits moyens de fixation desdits modules et desdits compteurs étant de formes complémentaires ce qui permet d'associer et de fixer lesdits modules uniquement auxdits compteurs.

2. Procédé selon la revendication 1 **caractérisé en ce que** lesdites formes complémentaires coopèrent entre elles par des formes interpénétrantes.

3. Procédé selon l'une des revendications 1 et 2 **caractérisé en ce que** l'on augmente le nombre de séries de compteurs compatibles avec lesdits modules dudit ensemble en modifiant lesdites formes complémentaires.

4. Procédé selon la revendication 3 **caractérisé en ce que** l'on modifie lesdites formes complémentaires en enlevant une partie déterminée desdites formes.

5. Procédé selon la revendication 2 **caractérisé en ce que** lesdites formes inter-pénétrantes sont rendues compatibles en ajustant leurs profondeurs d'interpénétration.

6. Module adapté à être fixé de façon sélective et amovible à un compteur (60) faisant partie d'une série déterminée de compteurs, notamment des compteurs d'eau, **caractérisé en ce que** ledit module comporte des moyens de fixation (80, 82, 92, 98) de formes complémentaires à des moyens de fixation (84, 86, 88, 90) situés sur lesdits compteurs de ladite série, à l'exclusion de compteurs d'une autre série, lesdits moyens de fixation (80, 82, 92, 98) dudit module et lesdits moyens de fixation (84, 86, 88, 90) desdits compteurs de ladite série formant au moins une clé mécanique, permettant ainsi de fixer ledit module uniquement auxdits compteurs de ladite série.

7. Module selon la revendication 6 **caractérisé en ce que** lesdits moyens de fixation dudit module comportent des moyens cassables (80, 82, 92) qui permettent, lorsqu'ils sont enlevés, de fixer ledit module sur au moins une autre série de compteurs, tout en restant compatibles avec les compteurs de ladite série.

8. Module selon l'une des revendications 6 et 7 **caractérisé en ce que** lesdits moyens de fixation dudit module (80, 82, 92, 98) et lesdits moyens de fixation desdits compteurs (84, 86, 88, 90) coopèrent entre eux par des formes en relief et en creux.

9. Module selon la revendication 8 **caractérisé en ce que** lesdits moyens de fixation dudit module comportent des rainures (80-82) aptes à se clipser sur des renflements (84-86) situés sur ledit compteur.

10. Module selon la revendication 8 ou 9 **caractérisé en ce que** lesdits moyens de fixation du module comportent au moins un logement (98) faisant partie d'un évidemment (94) en forme de trou de serrure, ledit logement (98) étant apte à recevoir un ergot (90) disposé sur ledit compteur et qui peut être clipsé dans ledit logement.

11. Compteur apte à être fixé de façon sélective à un module amovible (62), ledit compteur (60) faisant partie d'une série déterminée de compteurs identiques, notamment des compteurs d'eau, **caractérisé en ce que** ledit compteur comporte des moyens de fixation (84, 86, 88, 90) identiques pour chacun desdits compteurs de ladite série, lesdits moyens étant de formes complémentaires à des moyens de fixation (80, 82, 92, 98) situés sur ledit module, lesdits moyens de fixation dudit compteur (84, 86, 88, 90) et lesdits moyens de fixation dudit module (80, 82, 92, 98) formant au moins une clé mécanique, permettant ainsi de fixer ledit module uniquement auxdits compteurs de ladite série, à l'exclusion de compteurs d'une autre série.

12. Compteur selon la revendication 11 **caractérisé en ce que** lesdits moyens de fixation dudit compteur comportent des moyens cassables (90) qui permettent, lorsqu'ils sont enlevés, de fixer sur ledit compteur un module non identique audit module, tout en restant compatible avec ledit module.

13. Compteur selon l'une des revendications 11 et 12 **caractérisé en ce que** lesdits moyens de fixation dudit compteur (84, 86, 88, 90) coopèrent avec lesdits moyens de fixation dudit module (80, 82, 92, 98) par des formes en relief et en creux.

14. Compteur selon la revendication 13 **caractérisé en ce que** lesdits moyens de fixation du compteur comportent des renflements (84-86) aptes à se clipser dans des rainures (80-82) situées sur le module.

15. Compteur selon la revendication 13 ou 14 **caractérisé en ce que** lesdits moyens de fixation du compteur comportent au moins un ergot (90) apte à se clipser dans un logement (98) faisant partie d'un évidemment (94) en forme de trou de serrure, ledit évidemment étant solidaire dudit module.

16. Dispositif constitué d'un module selon l'une des revendications 6 à 10 fixé à un compteur selon l'une des revendications 11 à 15.
